# EUROPEAN PATENT APPLICATION

(11) **EP 0 522 692 A2**
(43) Date of publication of application: **13.01.1993**
(21) Application number: 92304512.4
(22) Date of filing: 19.05.1992
(51) Int. Cl.: B01D 39/20, B01D 46/52

(54) **Filter**

(30) Priority: 12.06.1991 GB 9112615
(71) Applicant: Domnick Hunter Filters Limited, Birtley, Co. Durham DH3 2SF (GB)
(72) Inventor: Ridealgh, David Charles, Cullercoats, NE30 4PH (GB)
(74) Representative: Geldard, David Guthrie

(57) **Abstract**

A filter comprises a cylindrical pleated filter element (1) located between radially inner and outer supports (2,3) and extending axially between first and second end caps bonded to opposite ends of the filter element. The filter element is formed as a sandwich comprising a central mat (6) of borosilicate glass microfibre having a major portion of the microfibre surface coated with a fluoro-polymer, and two outer layers (8), one on each side of the mat, each outer layer comprising a net fabric of thermoplastic material. The filter element has an axial seam (9) formed by a melted section of the net fabric permeating through the other materials of the filter element.

## Description

This invention relates to filters.

A known type of filter used in air sterilisation comprises a cylindrical pleated filter element located between radially inner and outer supports and extending axially between first and second end caps bonded to opposite ends of the filter element, at least one of the end caps being open to allow access to the interior of the filter element. Such filters are usually used with an out-to-in air flow, the sterilised air leaving the interior of the element through the open end cap. a filter medium known for use in this type of filter is borosilicate glass microfibre, which is available in the form of non-woven mats having minimum DOP efficiencies of 99.999%. Although extremely effective filtration can be obtained using this medium it has been found that the medium is subject to degradation as water is carried in the air to be sterilised, either in droplet or in vapour form. Wetting of the filter medium also occurs during the steam sterilisation that is necessary from time to time. The wet environment encourages bacteria to grow through the filter medium, and also weakens the filter medium so that it is less resistant to stress.

The invention seeks to provide a filter that will better withstand both the operating and the sterilising environment.

According to the invention a filter comprises a cylindrical pleated filter element located between radially inner and outer supports and extending axially between first and second end caps bonded to opposite ends of the filter element, at least one of the end caps being open to allow access to the interior of the filter element, the filter element being formed as a sandwich comprising a central mat of borosilicate glass microfibre having a major portion of the microfibre surface coated with a fluoro-polymer, and two outer layers, one on each side of the mat, each outer layer comprising a net fabric of thermoplastic material, the filter element having an axial seam formed by a melted section of the net fabric permeating through the other materials of the filter element. In use it has been found that the hydrophobicity of the fluoro-polymer coating acts to repel water from the glass fibre both during operation and during steam sterilisation. As a result, wetting of the glass fibre medium is inhibited and there is less tendency for bacterial infestation of the medium because of the drier environment. Degradation of the glass fibre material is reduced and tests have shown that the filter can have a much longer effective life that conventional filters.

Forming a seam in a fluoro-polymer coated glass fibre medium presents difficulties, and the use of a thermoplastic net fabric to each side of the material, melted to permeate the material and thus form an effective bonded seal solves this difficulty in a manner that is both cost effective and simple to use in production.

Preferably the sandwich also includes an intermediate layer between the mat and either or both of the outer layers, the or each intermediate layer being of a porous support fabric.

Although the end caps may be of any suitable material, and may be bonded to the filter element by any one of many different methods well known in the art it is preferred that the end caps are of thermoplastic material and that they are simply melt-bonded to opposite ends of the filter element. Again this is advantageous in terms both of production and cost.

The radially inner and outer supports are conveniently foraminous or perforated cylinders of any suitable material, such as stainless steel or a suitable plastics material; the presently preferred material is polypropylene.

The coating of the glass microfibre may be effected by incorporating the fluoro-polymer into a slurry of glass fibre before this is formed into the mat in known manner, or by impregnating a pre-formed mat with the polymer (e.g., by passing the mat through a bath of the polymer and subsequently curing the polymer), or by spraying the polymer onto the pre-formed mat. Any one of these techniques can be adjusted so that the required coating level will be achieved.

The particular fluoro-polymer that is used is preferably polytetrafluoroethylene, although other possible polymers are polyvinyldifluoride and polytrifluorochloroethylene. Preferably at least 60% of the microfibre surface area is coated with fluoro-polymer. Desirably the mat has a water entry pressure of at least 17.25kPa (2.5 psi) gauge, indicating a degree of hydrophobicity, and is such that it will float on water, rather than absorb water and sink.

The support fabric should be substantially inert and a non-woven fabric of polyamide for example Nomex (Trade Mark), has been found particularly suitable. The net fabric may be of any suitable thermoplastic material, and polypropylene is presently preferred.

In order that the invention may be better understood a filter in accordance therewith will now be described in more detail, by way of example only, with reference to the accompanying drawings in which:-
Fig 1 shows schematically a filter according to the invention;
Fig 2 shows a detail of a filter element incorporated in the filter of Fig 1;
Fig 3 is a cross-section on a line III-III of Fig 2; and
Fig 4 shows an enlarged detail of the part circled at IV in Fig 2.

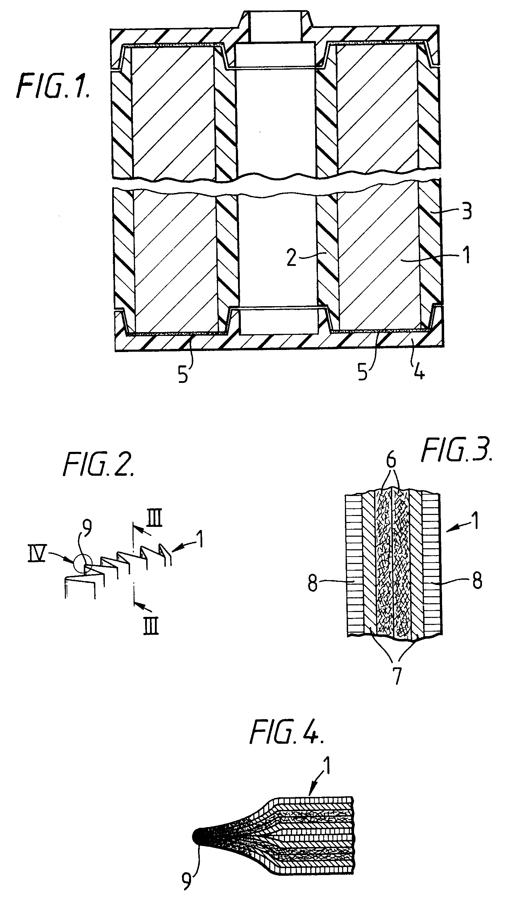

Fig 1 shows a filter that comprises a cylindrical pleated filter element located between radially inner and outer supports 2 and 3 respectively and extending axially between a lower end cap 4 and an upper end cap. Each of the inner and outer supports 2,3 is formed by a perforated cylinder of polypropylene. The lower end cap 4 is of polypropylene and the filter element is bonded to the end cap by melt-bonding, the bonded area being indicated at 5. To effect the bonding the end cap is simply heated in the area required, and the filter element inserted once the appropriate melting temperature or time has been reached. After cooling, the bond is completed and in addition to securing the elements together it prevents any bypass from the inside to the outside of the filter element.

The upper end cap is also of propylene and is secured to the filter element in a similar manner, the upper end cap having an opening by way of which sterile air leaves the interior of the filter element.

As illustrated in Fig 2 the filter element 1 is of pleated form and is held between and supported by the inner and outer supports 2 and 3.

The structure of the filter element is shown in more detail in the cross-sectional view of Fig 3. This shows that the element is formed as a sandwich including a central mat 6 comprising two layers of borosilicate glass microfibre. The majority of the microfibres have a diameter smaller that 0.7 micron and the mat has a DOP efficiency of 99.999% or better, thus giving sterile air. The glass microfibres are impregnated with polytetrafluoroethylene by passing each pre-formed layer through a bath of PTFE dispersed in water and subsequently curing at a temperature of about 400°C. The impregnation is desirably such that approximately 60% of the microfibre surface area is coated with the fluoro-polymer, that each layer of the mat has a water entry pressure of about 20.7kPa (3psi) gauge and that each layer will float on water rather than absorb water and sink.

The central mat 6 is sandwiched between two layers 7 of a non-woven porous polyamide support fabric sold under the trade mark Nomex. Finally, the element includes two outer layers 8 each of a polypropylene net fabric.

The pleated filter element is formed with an axially extending seam 9. This is formed by a heat, impulse or ultrasonic method that causes the polypropylene of the relevant areas of the net fabric layers 8 to melt and permeate through the support fabric and central mat to bond the materials together. after cooling, a strong bond is obtained which fully withstands the pressures during filtration and during steam sterilisation.

It will be understood that only a single embodiment of the invention has been described and that there are various modifications that can be made; in particular the central mat may be made up of one, three or more layers of borosilicate glass microfibre, either or both of the layers 7 may be omitted, and materials may vary from those specifically mentioned.

## Claims

1. A filter comprising a cylindrical pleated filter element located between radially inner and outer supports and extending axially between first and second end caps bonded to opposite ends of the filter element, at least one of the end caps being open to allow access to the interior of the filter element, the filter element being formed as a sandwich comprising a central mat of borosilicate glass microfibre having a major portion of the microfibre surface coated with a fluoro-polymer, and two outer layers, on each side of the mat, each outer layer comprising a net fabric of thermoplastic material, the filter element having an axial seam formed by a melted section of the net fabric permeating through the other materials of the filter element.

2. A filter according to claim 1 in which the sandwich also includes an intermediate layer between the mat and either or both of the outer layers, the or each intermediate layer being of a porous support fabric.

3. A filter according to claim 1 or claim 2 in which the end caps are of thermoplastic material melt-bonded to opposite ends of the filter element.

4. A filter according to any of the preceding claims in which the fluoro-polymer is polytetrafluoroethylene.

5. A filter according to any one of the preceding claims in which at least 60% of the microfibre surface area is coated with the fluoro-polymer.

6. A filter according to any one of the preceding claims in which the mate has a water entry pressure of at least 17.25kPa gauge.
